# EUROPEAN PATENT APPLICATION

(11) **EP 2 290 226 A2**
(43) Date of publication of application: **02.03.2011**
(21) Application number: 10173287.3
(22) Date of filing: 18.08.2010
(51) Int. Cl.: F03D 7/00, G01W 1/02

(54) **Systems and methods for interfacing renewable power sources to a power grid**

(30) Priority: 28.08.2009 US 549966
(71) Applicant: General Electric Company, Schenectady, NY 12345 (US)
(72) Inventor: Cardinal, Mark Edward, Altamont, NY 12009 (US); Galbraith, Anthony William, Wirtz, VA 24184 (US)
(74) Representative: Bedford, Grant Richard

(57) **Abstract**

Systems 100 and methods 200 for interfacing renewable power sources 105 to a power grid 115 are provided. In certain systems and methods, at least one weather condition that may affect the power output of a renewable power source 105 is identified. A potential impact of the identified at least one weather condition on the renewable power source 105 is determined. Historical data associated with the impact of at least one prior weather condition on the renewable power source 105 is accessed. An output of the renewable power source 105 that is supplied to the power grid 115 is adjusted based at least in part on the determined potential impact and the historical data.

## Description

Embodiments of the invention relate generally to renewable power sources and more specifically to systems and methods for interfacing renewable power sources to a power grid.

Renewable power sources, such as photovoltaic (PV) or solar cells, are utilized in a wide variety of applications for power production. PV cells generally convert light, such as sunlight, directly into electricity by creating a voltage in a material upon exposure to electro-magnetic radiation. The output signal generated by the PV cells is a direct current (DC) signal. In order to supply the DC signal to a power grid, which typically operates using alternating current (AC), the DC signal is typically supplied to an inverter that converts the DC signal to an AC signal.

PV cells are often formed into arrays. As larger arrays or groupings of PV cells or wind turbines are utilized, for example at a relatively large PV power plant or at a collection of smaller PV power plants, a larger supply of power may be provided to the power grid. If a drop-off in power output of the PV cells occurs, such as a drop-off in power output due to the effects of cloud cover or other weather conditions, then the stability of the power grid or the demand on regulation services provided by dispatchable power generating units may be affected. For PV cells, a drop-off in power output of the PV cells may occur relatively quickly, leading to relatively large spikes within the power grid. The grid frequency may dip below the target of either 50 or 60 Hz due to the effects of various weather conditions. Additionally, if multiple whether conditions affect the PV cells, such as a pattern of clouds passing over the PV cells, instability may occur due to relatively rapid fluctuations in the power output of the PV cells.

Therefore, a need exists for systems and methods for interfacing renewable power sources to a power grid.

Some or all of the above needs and/or problems may be addressed by certain embodiments of the invention. Embodiments of the invention may include systems and methods for interfacing a renewable power source to a power grid. According to one embodiment of the invention, there is disclosed a method for interfacing a renewable power source, such as photovoltaic cells, to a power grid. At least one weather condition that may affect the power output of the renewable power source is identified. A potential impact of the identified at least one weather condition on the renewable power source is determined. Historical data associated with the impact of at least one prior weather condition on the renewable power source is accessed. An output of the renewable power source that is supplied to the power grid is adjusted based at least in part on the determined potential impact and the historical data.

According to another embodiment of the invention, there is disclosed a system for interfacing one or more renewable power sources, such as one or more photovoltaic cells, to a power grid. The system may include a renewable power source, at least one sensing device, and at least one controller. The at least one sensing device may be operable to identify at least one weather condition operable to affect the power output of the renewable power source. The at least one controller may be operable to determine a potential impact of the at least one weather condition on the renewable power source, to access historical data associated with the impact of at least one prior weather condition on the renewable power source, and to adjust, based at least in part on the determined potential impact and the historical data, an output of the renewable power source that is supplied to the power grid.

According to another embodiment of the invention, there is disclosed a method for interfacing one or more renewable power sources, such as photovoltaic cells, to a power grid. A plurality of weather conditions operable to affect power output of a plurality of photovoltaic cells may be identified. A potential impact of the plurality of weather conditions on the plurality of photovoltaic cells may be determined. Historical data associated with adjusting the power output of the plurality of photovoltaic cells within a predetermined historical period of time may be accessed. Based at least in part on the determined potential impact and the accessed historical data, an output of the plurality of photovoltaic cells that is supplied to the power grid may be adjusted.

Additional systems, methods, apparatus, features, and aspects are realized through the techniques of various embodiments of the invention. Other embodiments and aspects of the invention are described in detail herein and are considered a part of the claimed invention. Other embodiments and aspects can be understood with reference to the description and the drawings.

Having thus described the invention in general terms, reference will now be made to the accompanying drawings, which are not necessarily drawn to scale, and wherein:
FIG. 1 is a schematic diagram of one example system for interfacing a renewable power source to a power grid, according to an illustrative embodiment of the invention.
FIG. 2 is a flow chart of one example method for interfacing a renewable power source to a power grid, according to an illustrative embodiment of the invention.
FIG. 3 is a flow chart of another example method for interfacing a renewable power source to a power grid, according to an illustrative embodiment of the invention.
FIG. 4 is a graphical representation of one example of the potential effects of a pattern of weather conditions on the output of a renewable power source, according to an illustrative embodiment of the invention.
FIG. 5 is a graphical representation of example outputs of a renewable power source based upon varying ramping conditions, according to an illustrative embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

For purposes of this disclosure, the term "renewable power source" may refer to any suitable device, system, method, and/or combination of devices and/or systems and/or methods that are operable to generate power using renewable energy sources, such as solar energy and wind. Examples of renewable power sources include, but are not limited to, photovoltaic cells, photovoltaic arrays, and/or wind turbines. In certain embodiments of invention, the renewable power source may include power generating devices and devices that are operable to interface the power generating devices to a power grid. For example, a renewable power source may include a photovoltaic array and one or more inverters that are operable to interface the photovoltaic array to a power grid.

For purposes of this disclosure, the term "weather sensing device" may refer to any suitable device, system, method and/or combination of devices and/or systems and/or methods that facilitate the identification and/or tracking of one or more weather conditions. Examples of weather sensing devices include, but are not limited to, Doppler-type radar, other radar devices, weather satellites, wind sensors, heat or temperature sensors, humidity or moisture sensors, rainfall or precipitation indicators, irradiance sensors, etc. Additionally, weather conditions may be sensed by or at a renewable power source itself. For example, weather conditions may be detected as they affect a renewable power source or a portion of an renewable power source. The terms "weather sensing device" and "sensing device" can be utilized interchangeably in this disclosure.

Disclosed are systems and methods for interfacing one or more renewable power sources, such as photovoltaic (PV) cells, to a power grid. Weather conditions that may affect the power output of the renewable power sources, for example, clouds, etc., may be identified, and a potential impact of the weather conditions on the output of the renewable power sources may be determined. In certain embodiments, patterns of weather conditions, such as patterns of clouds, may be identified and the potential impact of an identified weather pattern may be determined. As desired, the potential impact of the weather conditions and/or weather patterns may be determined or calculated based on one or more measured and/or determined characteristics associated with the weather conditions. Based on the determined potential impact, one or more control actions may be taken to minimize the effects of the weather conditions on the power grid and to maintain the stability of the power grid. For example, the output of one or more inverters that interface PV cells to the power grid may be ramped down, shut off, or otherwise adjusted. As another example, the output of the ramp down and/or ramp up rate of the one or more inverters may be controlled in order to maintain the stability of the power grid. As yet another example, supplemental power may be provided to the power grid from one or more supplemental power sources. As a result, relatively stable conditions may be maintained in the power grid.

Various embodiments of the invention may include one or more special purpose computers, systems, and/or particular machines that facilitate the determination of a potential impact that a weather condition or pattern of weather conditions may have on renewable power sources and the taking of a control action, such as the adjustment of an output from the renewable power source supplied to a power grid, based at least in part upon the determined potential impact. A special purpose computer or particular machine may include a wide variety of different software modules as desired in various embodiments. As explained in greater detail below, in certain embodiments, these various software components may be utilized to collect weather condition information, to determine a potential impact of identified weather conditions, and to take various control actions based at least in part upon the determined potential impact.

Various embodiments of the invention described herein may have the technical effect of determining the potential effects or impact of weather conditions and/or patterns of weather conditions on one or more renewable power sources. Certain embodiments of the invention may further have the technical effect of adjusting, based at least in part on the determined potential impact, an output of the renewable power source that is supplied to a power grid in order to maintain and/or enhance the stability of the power grid.

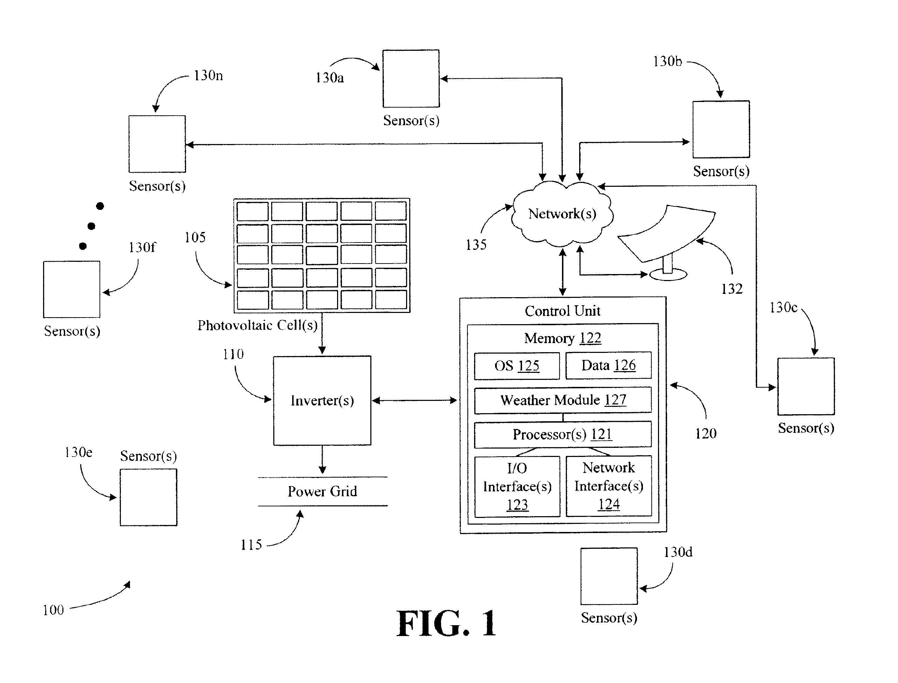

FIG. 1 is a block diagram of one example system 100 for interfacing a renewable power source to a power grid, according to an illustrative embodiment of the invention. The system 100 illustrated in FIG. 1 includes one or more photovoltaic cells 105 and, therefore, may be applicable to a renewable power source that utilizes photovoltaic cells, such as a solar power plant. However, various embodiments of the invention may equally be applicable to other renewable power sources, for example, a wind farm or wind turbine farm.

With reference to FIG. 1, the system 100 may include one or more photovoltaic cells 105, one or more inverters 110, a power grid 115, and at least one control unit 120. Any number of photovoltaic (PV) cells 105 may be utilized as desired in various embodiments of the invention. Additionally, the PV cells 105 may be formed into one or more PV arrays, solar panels, and/or solar modules as desired in various embodiments. Additionally, the PV cells 105 may be formed into various groupings of arrays, panels, and/or modules, for example, into smaller solar plants situated in relatively close proximity to one another or within the same general geographical area. The PV cells 105 may be operable to convert light, such as sunlight, directly into electricity by utilizing the photovoltaic effect. A voltage may be created in the PV cells 105 based upon exposure to electro-magnetic radiation. A wide variety of different types of PV cells 105 may be utilized as desired in various embodiments of the invention, including but not limited to, crystalline silicon cells, vacuum deposition cells, thin-film cells, multi-junction photovoltaic cells, etc.

Various weather conditions and/or patterns of weather conditions may affect the output of the PV cells 105. For example, partial or complete shading, may reduce or lower the output of the PV cells 105. Such shading may occur as a result of cloud cover over a portion or all of the PV cells 105, resulting in a reduction in the amount of light that reaches the PV cells 105. As explained in greater detail below, various embodiments of the invention are operable to identify weather conditions and/or weather patterns, such as cloud cover and cloud patterns, that may affect the output of the PV cells 105 and to take appropriate action once one or more weather conditions are identified.

The PV cells 105 may output a direct current (DC) signal. In order to supply the DC signal to a power grid, such as power grid 115, the DC signal may be converted into an alternating current (AC) signal. The at least one inverter 110 may be operable to convert one or more DC signals output by the PV cells 105 into one or more suitable AC signals that may be supplied or provided to a power grid 115. In certain embodiments, AC power may be provided to the power grid 115 via one or more inverter devices directly from individual modules of the PV cells 105. In other embodiments, the output of multiple modules of the PV cells 105 may be provided to the power grid 115 as AC power via a single inverter or inverter device. A wide variety of various transformers, switches and/or control circuits associated with the inverters 110 may be utilized to adjust the voltage and/or frequency of the AC signal that is supplied to the power grid 115. Additionally, as desired in certain embodiments, one or more three-phase inverters may be utilized.

The power grid 115 may be any suitable electrical network or combination of electrical networks that facilitates electrical power transmission and/or distribution. Any number of power generating devices may be utilized as desired to supply power to the power grid 115, including but not limited to, gas turbines, steam turbines, geothermal power generating devices, wind turbines, photovoltaic cells, etc. Attempts may be made to maintain the power grid 115 at a relatively constant frequency or within a range of acceptable frequencies, for example, approximately 50 Hertz to approximately 60 Hertz. Transient events, such as a fluctuation in the output of a power generating device or power generating system, may affect the frequency and stability of the power grid. In certain circumstances, transient events may occur as a result of one or more weather conditions and/or weather patterns affecting the output of a power generating device or system. As explained in greater detail below, embodiments of the invention may be operable to identify weather conditions and the potential impact of the identified weather conditions on power generating devices. In this regard, the output of the power generating devices that is supplied to the power grid 115 may be adjusted in order to maintain stability within the power grid 115. The system 100 may further include at least one control unit 120. The control unit 120 may be operable to control at least a portion of the operations of a renewable power source, such as the photovoltaic cells 105 and the inverters 110 illustrated in FIG. 1. The control unit 120 may further be operable to control an output of a renewable power source that is supplied to a power grid 115 in order to maintain stability within the power grid 115. In various embodiments of the invention, the controlling of an output that is supplied to a power grid 115 may be based at least in part on identified weather conditions and/or weather patterns and the determination of a potential impact of the identified weather conditions and/or weather patterns on the renewable power source.

With continued reference to FIG. 1, the control unit 120 may be a suitable processor driven device that is capable of controlling an output of the PV cells 105 that is supplied to the power grid 115 via the one or more inverters 110. Examples of suitable control units include, but are not limited to, application specific circuits, microcontrollers, minicomputers, personal computers, servers, and the like. In certain embodiments the control unit 120 may be or may be incorporated into a supervisory command and data acquisition (SCADA) system associated with a renewable power source. The control unit 120 may include any number of processors 121 that facilitate the execution of computer-readable instructions to control the operations of the control unit 120. By executing computer-readable instructions associated with controlling an output of the PV cells 105 that is supplied to the power grid 115, the control unit 120 may form a special purpose computer that controls the supply of a power output to the power grid 115 via the inverter 110.

In addition to one or more processor(s) 121 the control unit 120 may include one or more memory devices 122, one or more input/output ("I/O") interfaces 123, and one or more network interfaces 124. The one or more memory devices 122 may be any suitable memory devices for example, caches, read only memory devices, random access memory devices, magnetic storage devices, etc. The one or more memory devices 122 may store data, executable instructions, and/or various program modules utilized by the control unit 120, for example, data 126, an operating system 125, and/or a weather module 127 or weather application. The data 126 may include stored data associated with the operation of the PV cells 105, stored data associated with the power grid 110, stored data associated with one or more identified weather conditions, stored data associated with one or more identified patterns of weather conditions, historical data associated with weather conditions and/or weather patterns, historical data associated with the output of the PV cells 105, stored data associated with determined characteristics associated with identified weather conditions, stored data associated with a determined potential impact of various weather conditions, stored historical data associated with one or more weather conditions, and/or stored data associated with other power generating devices and/or system that are connected to the power grid 110.

In certain embodiments of the invention, the control unit 120 may include any number of software applications that are executed to facilitate the operations of the control unit 120. The software applications may include computer-readable instructions that are executable by the one or more processors 121. The execution of the computer-readable instructions may form a special purpose computer that facilitates the control of an output of the PV cells 105 that is supplied to the power grid. As an example of a software application, the control unit 120 may include an operating system ("OS") 125 that controls the general operation of the control unit 120 and that facilitates the execution of additional software applications. The control unit 120 may also include a weather module 127 or weather application that is operable to determine a potential impact of one or more identified weather conditions on the output of the PV cells 105 and to control the output of the PV cells 105 that is supplied to the power grid 115 based at least in part on the determined potential impact. The weather module 127 may receive various data, such as data associated with one or more identified weather conditions. As desired, the data associated with one or more identified weather conditions may be received from one or more sensing devices in communication with the control unit 120. Alternatively, the weather module 127 may identify a weather condition based at least in part on a determined change in the output of at least a portion of the PV cells 105. In certain embodiments, the weather module 127 may also determine and/or receive various characteristics associated with identified weather conditions, for example, a location of a weather condition, a size or estimated size of a weather condition, a direction of movement of a weather condition, a rate of movement or speed of a weather condition, an opacity of a weather condition, etc. Additionally, the weather module 127 may determine a potential impact of a weather condition on the PV cells 105 or on another renewable power source. For example, the weather module 127 may determine a potential loss in output of the PV cells 105 that may be caused by a weather condition, such as clouds that are approaching or that have blocked at least a portion of sunlight to the PV cells 105. Based at least in part on the potential impact, the weather module 127 may take one or more control actions as desired in various embodiments of the inventions in order to maintain the stability of the power grid 115. Examples of control actions include, but are not limited to, ramping down or reducing an output of the PV cells 105 that is supplied to the power grid 115 by the inverter(s) 110 and/or directing or requesting the supply of power to the power grid 115 by one or more supplemental power sources in order to compensate for any output loss of the PV cells 105. Although the weather module 127 is illustrated as a single software module or software application, the weather module 127 may include any number of software modules, applications, routines, and/or subroutines as desired in various embodiments of the invention.

Additionally, in certain embodiments, the weather module 127 may be operable to identify one or more weather patterns that are approaching and/or may affect the PV cells 105. A wide variety of different weather patterns may be identified as desired in various embodiments of the invention, for example, a series of approaching clouds. The one or more weather patterns may be identified in a similar manner as that utilized to identify weather conditions. For example, information associated with weather patterns may be received from one or more sensing devices. Various characteristics associated with a weather pattern and/or weather conditions included in the weather pattern may be determined. Additionally, a potential impact of the weather pattern and/or the weather conditions included in the weather pattern on the PV cells 105 may be determined. The output of the PV cells 150 that is supplied to the power grid 115 may be adjusted based at least in part on the determined potential impact. According to an aspect of the invention, the weather module 127 may also access historical data associated with previously identified weather conditions and/or weather patterns. At least a portion of the accessed historical data may be utilized in the adjustment of the output of the PV cells 150 that is supplied to the power grid 115. For example, historical data associated with ramping up and/or ramping down the output that is supplied to the power grid may be analyzed and future ramping may be adjusted based at least in part on the historical data. In this regard, rapid ramping conditions may be reduced and relatively greater stability may be maintained in the power grid 115.

The one or more I/O interfaces 123 may facilitate communication between the control unit 120 and one or more input/output devices, for example, a universal serial bus port, a serial port, a disk drive, a CD-ROM drive, and/or one or more user interface devices, such as, a display, keyboard, keypad, mouse, control panel, touch screen display, microphone, etc. that facilitate user interaction with the control unit 120. The one or more I/O interfaces 123 may be utilized to receive or collect data and/or user instructions from a wide variety of input devices. Received data may be processed by the weather module 127 as desired in various embodiments of the invention and/or stored in the one or more memory devices 122.

The one or more network interfaces 124 may facilitate connection of the control unit 120 to one or more suitable networks 135, for example, a local area network, a wide area network, the Internet, a cellular network, a radio frequency network, a Bluetooth enabled network, a Wi-Fi enabled network, a satellite-based network, any wired network, any wireless network, etc. In this regard, the control unit 120 may receive measurements data, other weather condition data and/or instructions from one or more sensing devices, external devices, network components, and/or systems via the one or more networks 135. For example, the control unit 120 may receive measurements data associated with weather conditions and/or other data associated with weather conditions from any number of suitable sensing devices via the one or more networks 135. As another example, the control unit 120 may receive data associated with identified weather conditions from one or more external systems and/or devices as desired in various embodiments of the invention via the one or more suitable networks 135.

According to an aspect of the invention, weather conditions and/or weather patterns may be identified utilizing a wide variety of suitable sensing devices and/or techniques. Examples of suitable sensing devices and/or techniques include, but are not limited to, Doppler-type radar devices, other radar devices operable to detect and/or track weather conditions and/or weather patterns, one or more satellites operable to detect and/or track weather conditions, heat or temperature sensors, humidity or moisture sensors, rainfall or precipitation indicators, irradiance sensors operable to detect weather conditions, laser rangefinders and/or other laser devices or sensors, other sensors operable to detect weather conditions, and/or the detection of a weather condition once it reaches a photovoltaic array or other renewable power system based at least in part on the effects of the weather condition on a portion of the renewable power system. Any suitable sensing devices, techniques, and/or combination of sensing devices and/or techniques may be utilized as desired in various embodiments of the invention. If multiple devices and/or techniques are utilized, the measurements and/or determinations made utilizing the respective devices and/or techniques may be combined together or otherwise used in conjunction with each other as desired to obtain greater accuracy or to obtain more weather-related data.

With reference to FIG. 1, one example of a suitable sensing device operable to detect and/or track weather conditions and/or weather patterns is a radar device 132, such as a Doppler-type radar device, or a satellite-based sensing device. A radar device 132 may generate and output microwave or other test signals that are reflected by weather conditions, and the radar device 132 may sense returned echoes from the weather conditions. In this regard, the radar device 132 may identify weather conditions and/or weather patterns and measure or determine a radial velocity for identified weather conditions and/or patterns. As another example, a weather satellite, such as a polar orbiting or geostationary satellite, may be utilized to track and/or monitor weather conditions and/or weather patterns. Radar devices 132, weather satellite devices, and/or their associated systems, may be operable to communicate data associated with identified weather conditions to the control unit 122 via the one or more suitable networks 135.

Another example of a suitable sensing technique operable to detect and/or track weather conditions and/or weather patterns involves the use of one or more sensors and/or sensing arrays. As shown in FIG. 1, any number of sensors 130a-n may be positioned proximate to and/or at one or more predetermined distances from the photovoltaic cells 105. In certain embodiments of the invention, these sensors 130a-n may each include one or more irradiance sensors that are operable to detect an amount of light. For example, the irradiance sensors may measure received light as watts per square meter. In this regard, the irradiance sensors may be operable to detect or identify a weather condition that may affect the output of the PV cells 105.

In certain embodiments, sensors 130a-n, such as irradiance sensors, may be positioned at one or more predetermined distances from the PV cells 105. In this regard, weather conditions, such as clouds, and/or weather patterns, such as patterns of clouds, may be identified prior to the weather conditions and/or patterns reaching the PV cells 105. As one example, sensors 130a-n may be positioned in or within one or more rings or approximate circles situated about the PV cells 105. In this regard, weather conditions and/or patterns may be identified as they approach the PV cells 105 from any direction or from multiple directions. It is not necessary to include sensors at every position within a ring or circle, and any desired distance may be utilized between two sensors within a ring or circle. For example, sensors 130a-n may be positioned at approximately one mile, at approximately one-half of a mile, at approximately one-quarter of a mile, and/or at any other desired distance from the PV cells 105 in various embodiments of the invention. Additionally, sensors 130a-n may be positioned in other configurations besides rings as desired. Measurements taken by the sensors 130a-n and/or determinations or calculations made by any controllers that may be associated with the sensors 130a-n may be communicated to the control unit 120 via the one or more suitable networks 135.

Each of the sensors 130a-n may be operable to detect at least one weather condition. In certain embodiments, the location of a particular weather condition may be determined based at least in part on the location of one or more sensors 130a-n that have detected the weather condition. For example, location information may be stored for any number of the sensors 130a-n. As another example, a global positioning system (GPS) device may be associated with each sensor 130a-n, and location information may be determined for a sensor 130a-n. A wide variety of different techniques may be utilized as desired to determine other characteristics of a detected weather condition, for example, a rate of movement (e.g., velocity) and/or a direction of movement of a detected weather condition. As one example, by positioning sensors within multiple rings around the PV cells 105, a velocity and/or direction of an identified weather condition may be determined. Once the weather condition has been detected by two or more sensors positioned in respective rings, the direction or approximate direction of the weather condition may be determined. Similarly, a velocity or approximate velocity of the weather condition may be determined or calculated based on the time that it takes for the weather condition to travel between the various sensors. For example, the times at which the weather condition is detected by two sensors may be utilized in conjunction with the distance between the two sensors to calculate an approximate velocity of the weather condition.

For the above example, it is possible to situate a single sensor, such as 130a-n, at each position in which a weather condition is detected. As another example of placing sensors, an array of sensors may be placed at various positions about or around the PV cells 105. By utilizing an array of sensors at each position or location, a velocity and/or direction of an identified weather condition may be determined at each position or location. In this regard, it may be possible to utilize a single ring of sensing devices. For example, a weather condition may be detected and monitored as it passes over an array of sensors 130a-n. The location, direction, and/or velocity of the weather condition may then be determined and/or calculated. The location may be determined based upon the location of the array of sensors. The direction or approximate direction may be determined, for example, based upon a sequence of a detected decrease in light energy across the array of sensors. For example, if a northernmost sensor in the array detects a decrease in light energy and a sensor that is positioned to the south of the first sensor then detects a decrease in light energy, it may be determined that a detected weather condition is moving from the north to the south. Similarly, a velocity or approximate velocity of a detected weather condition may be determined, for example, based upon a sequence of a detected decrease in light energy across the array of sensors. For example, a time at which a decrease in light energy is detected at a first sensor and a time at which a decrease in light energy is detected at a second sensor may be utilized in association with the distance between the two sensors to determine or calculate a velocity or approximate velocity of a detected weather condition.

As another example of a method for detecting a weather condition, a weather condition may be detected once it reaches or otherwise affects the PV cells 105. The output of the PV cells 105 may be monitored and a decrease in the output may be detected and/or determined as the weather condition reaches and/or passes over or moves across at least a portion of the PV cells 105. In a similar manner as that described above utilizing arrays of irradiance sensors, a location, direction, and/or rate of movement of an identified weather condition may be determined and/or calculated as a weather condition passes over or moves across the PV cells 105. The output of the remaining PV cells 105 that is supplied to the power grid 115 may then be reduced or otherwise adjusted in order to maintain and/or enhance the stability of the power grid 115 or to reduce the impact of the local load balance requirements.

As yet another example of a method for detecting a weather condition and/or weather pattern, a weather condition or pattern may be detected once it reaches a first array or a first group of PV cells, and the output of other arrays or groups of PV cells may be adjusted in order to maintain and/or enhance the stability of the power grid 115. For example, multiple commercial and/or residential photovoltaic arrays, units, and/or power plants may be located within proximity of one another or within the same general area. A weather condition and/or weather pattern may be detected and/or tracked as it affects one or more of the photovoltaic arrays or units. The weather condition and/or pattern may be detected and/or tracked in a similar manner as that described above utilizing arrays of irradiance sensors. In this regard, a location, direction, and/or rate of movement of an identified weather condition may be determined and/or calculated. The output of other photovoltaic arrays or units may then be adjusted as the weather condition reaches and/or passes over or moves across the other photovoltaic arrays or units.

Although devices and/or techniques for detecting weather conditions that may affect the output of PV cells 105 are described above, embodiments of the invention may be equally applicable to other types of renewable power sources, such as wind turbines. In a similar manner, suitable sensors and/or techniques may be utilized to identify and/or detect wind conditions that may affect the output of wind turbines and/or a wind farm. The amount of power that is supplied from the wind turbines to the power grid 115 may then be adjusted in order to maintain and/or enhance the stability of the power grid 115.

As desired, embodiments of the invention may include a system 100 with more or less than the components illustrated in FIG. 1. The system 100 of FIG. 1 is provided by way of example only.

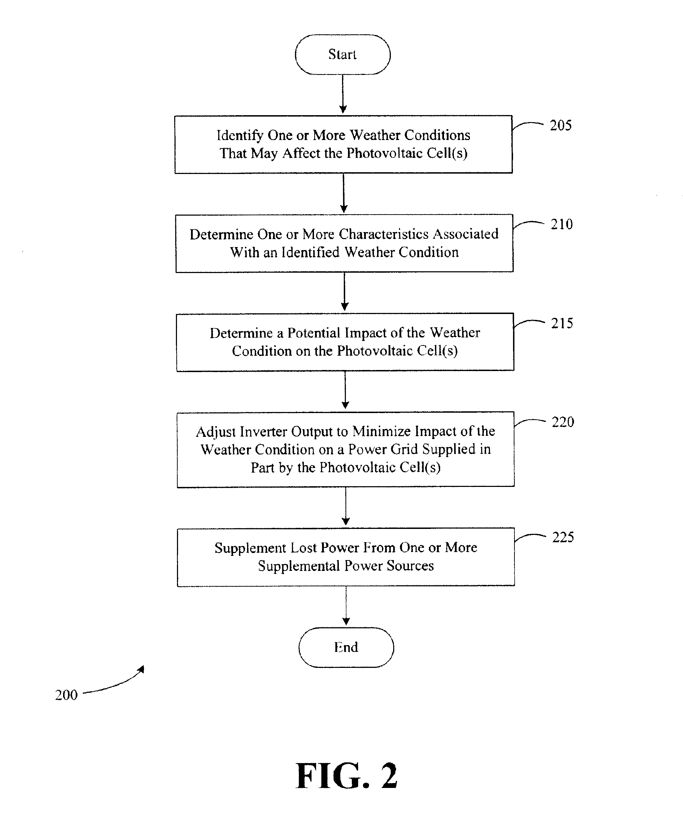

FIG. 2 is a flowchart illustrating one example method 200 for interfacing a renewable power source to a power grid, according to an illustrative embodiment of the invention. The method may be utilized in association with one or more renewable power sources, such as the system 100 illustrated in FIG. 1.

The method 200 may begin at block 205. At block 205, one or more weather conditions that may affect the output of a renewable power source, such as the PV cells 105 illustrated in FIG. 1, may be identified or detected. A wide variety of different types of weather conditions, for example, cloud cover, partial cloud cover, fog, etc., may be identified as desired in various embodiments of the invention. A wide variety of suitable sensing devices, systems, and/or techniques may be utilized as desired in various embodiments of the invention to identify and/or detect a weather condition. Examples of suitable sensing devices, systems, and/or techniques include, but are not limited to, Doppler-type radar, other radar devices, weather satellites, heat or temperature sensors, humidity or moisture sensors, rainfall or precipitation indicators, irradiance sensors, other sensors, and/or detecting a weather condition as it reaches and passes over or moves across the PV cells 105.

Once a weather condition has been identified at block 205, operations may continue at block 210, which may be optional in certain embodiments of the invention. At block 210, one or more characteristics associated with the identified weather condition may be determined and/or calculated. Characteristics may be determined and/or calculated by the sensing devices themselves and/or by a control unit, such as control unit 120 shown in FIG. 1, that receives data associated with a weather condition from one or more sensing devices. A wide variety of different characteristics may be measured, determined, and/or calculated as desired in various embodiments of the invention. Examples of characteristics that may be measured, determined, and/or calculated include, but are not limited to, an irradiance of light that is transmitted through the identified weather condition, an opacity of the identified weather condition, an altitude of the identified weather condition, a current location of the identified weather condition, a rate of movement of the identified weather condition, a direction of movement of the identified weather condition, a projected trajectory of the identified weather condition, etc.

Following the determination of one or more characteristics associated with the identified weather condition at block 210, operations may continue at block 215. At block 215, a potential impact of the identified weather condition on the PV cells 105 may be determined or calculated. The potential impact of the weather condition may include an estimated loss in the power output of the PV cells 105 that will occur as a result of the weather condition reaching and/or passing over or across the PV cells 105. The potential impact may be determined for all of the PV cells 105 or for certain portions, arrays, or cells of the PV cells 105. Additionally, as desired in various embodiments of the invention, the determined potential impact may take into account an estimated or actual time at which the weather condition reaches the PV cells 105, a number of the PV cells 105 that will be or that will potentially be affected, a sequence in which various PV cells 105 will be affected, etc. As an alternative to calculating an estimated loss in the power output of the PV cells 105, certain embodiments of the invention may assume a certain loss in power due to an indentified weather condition. For example, it may be assumed that a weather condition may lead to a complete loss in power output of the PV cells 105. Accordingly, the determined potential impact may to the PV cells 105 may include an assumption of a certain loss in power output.

In addition to or as an alternative to determining a potential impact of the weather condition on the power output of the PV cells 105, a potential impact of the weather condition on a power grid, such as power grid 115 shown in FIG. 1, may be determined. For example, a potential impact of the weather condition on the stability of the power grid 115 may be determined.

Once the potential impact of the weather condition on the PV cells 105 and/or the power grid 115 has been determined at block 215, operations may continue at block 220. At block 220, an output of the PV cells 105 that is supplied to a power grid, such as power grid 115 illustrated in FIG. 1, may be adjusted based at least in part on the determined potential impact. In this regard, the impact of the weather condition on the power grid 115 may be reduced and the stability of the power grid 115 may be maintained. In order to control the output of the PV cells 105 this is supplied to the power grid 115, the output of one or more inverters, such as inverters 110, that interface the PV cells 105 to the power grid 115 may be adjusted. For example, the output of the inverters 110 may be ramped down or reduced in order to reduce the effects of the weather condition on the power grid 115 as the weather condition passes over the PV cells 105. In this regard, spikes within the power grid 115 due to sharp reductions in power output of the PV cells 105 may be avoided. Additionally, the ramp down rate of the power output that is supplied to the power grid 115 may be controlled. In this regard, the power output may be ramped down in accordance with regulatory requirements, such as utility regulations.

At block 225, which may be optional in certain embodiments of the invention, some or all lost power from the PV cells 105 may be supplemented by utilizing one or more supplemental power sources. In certain embodiments, supplemental power sources may be utilized in conjunction with ramping down the inverters 110 in order to maintain a steady supply of power to the power grid 115. In other embodiments, supplemental power sources may be utilized without adjusting the inverters 110.

A wide variety of different supplemental power sources may be utilized as desired in various embodiments of the invention. Certain supplemental power sources may provide power directly to the power grid 115. Examples include any suitable power generating device or power generating system operable to produce power that is supplied to the grid, such as, gas turbines, steam turbines, other photovoltaic cells or arrays and their associated inverters, wind turbines, etc. In certain embodiments, a peaker device, peaker turbine, or peaker may be utilized to supply power to the power grid 115 in a relatively rapid manner to compensate for a loss in output of the PV cells 105. A peaker may be a device that can be ramped up relatively quickly to begin generating power. Other supplemental power sources may provide power to the inverters 110, and the inverters 110 may supply the power to the power grid 115. For examples, one or more batteries, battery arrays, or battery devices may supply supplemental power to the inverters 110 that may then be supplied to the power grid 115. As another example, power may be supplied from portions of the PV cells 105 that are not affected by the weather condition.

Additionally, in certain embodiments of the invention, one or more capacitors, capacitor banks, or capacitive devices may be utilized in conjunction with the inverters 110. The capacitors may store power that is output by the inverters prior to the power being supplied to the power grid 115. As a result of the power stored in the capacitors, the impact of a weather condition on the PV cells 105 may be minimized and/or delayed. In this regard, a greater response time may be provided in order to compensate for power output of the PV cells 105 as a result of weather conditions. Additionally, the power drop-off rate of the inverters 110 may be reduced, serving to reduce the possibility of spikes in the power grid 115.

The method 200 may end following block 225.

The operations described in the method 200 of FIG. 2 do not necessarily have to be performed in the order set forth in FIG. 2, but instead may be performed in any suitable order. Additionally, in certain embodiments of the invention, more or less than all of the elements or operations set forth in FIG. 2 may be performed.

Although the method 200 of FIG. 2 described operations that may be utilized with PV cells 105, the method 200 may equally be applicable to other types of renewable power sources, such as wind turbines. For example, a loss in wind condition may be measured or determined and its potential impact on a wind farm may be determined or calculated. The output of the wind turbines that is supplied to a power grid may then be adjusted in order to maintain the stability of the power grid.

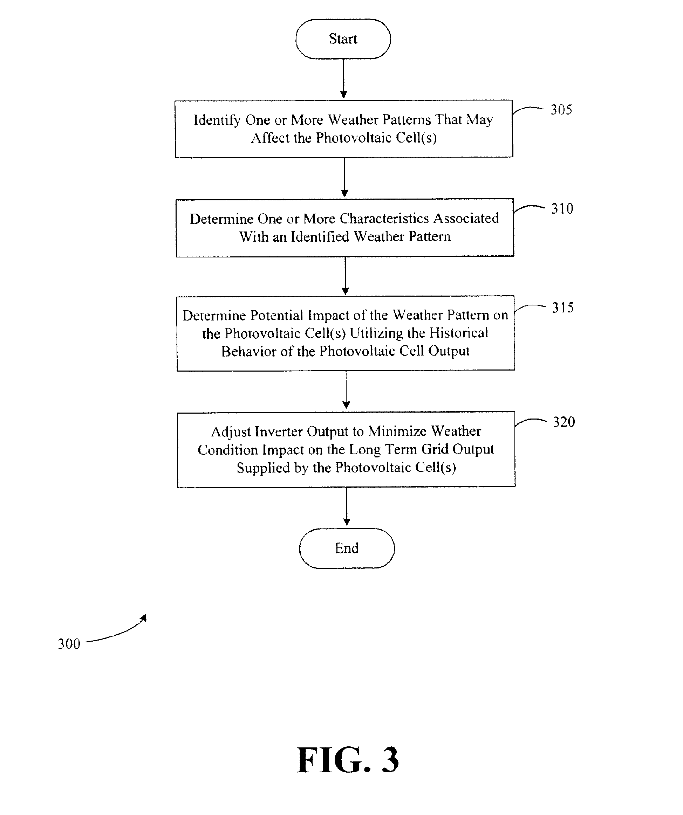

FIG. 3 is a flowchart illustrating one example method 300 for interfacing a renewable power source to a power grid, according to an illustrative embodiment of the invention. The method may be utilized in association with one or more renewable power sources, such as the system 100 illustrated in FIG. 1. Additionally, the method 300 may be utilized to identify a weather pattern or a pattern of weather conditions that may affect the renewable power sources and to adjust the output of the renewable power sources that is supplied to a power grid.

The method 300 may begin at block 305. At block 305, a weather pattern that may affect the output of a renewable power source, such as the PV cells 105 illustrated in FIG. 1, may be identified or detected. The identified weather pattern may include a plurality of identified weather conditions, for example, a series of clouds. A wide variety of different types of weather conditions, for example, cloud cover, partial cloud cover, fog, etc., may be identified as desired in various embodiments of the invention. A wide variety of suitable sensing devices, systems, and/or techniques may be utilized as desired in various embodiments of the invention to identify and/or detect the weather conditions. Examples of suitable sensing devices, systems, and/or techniques include, but are not limited to, Doppler-type radar, other radar devices, weather satellites, heat or temperature sensors, humidity sensors, irradiance sensors, other sensors, and/or detecting a weather condition as it reaches and passes over or moves across the PV cells 105.

Once a weather pattern or series of weather conditions has been identified at block 305, operations may continue at block 310, which may be optional in certain embodiments of the invention. At block 310, one or more characteristics associated with the identified weather pattern and/or the weather conditions included in the weather pattern may be determined and/or calculated. Characteristics may be determined and/or calculated by the sensing devices themselves and/or by a control unit, such as control unit 120 shown in FIG. 1, that receives data associated with a weather condition from one or more sensing devices. A wide variety of different characteristics may be measured, determined, and/or calculated as desired in various embodiments of the invention. Examples of characteristics that may be measured, determined, and/or calculated include, but are not limited to, an irradiance of light that is transmitted through weather conditions included in the weather pattern, an opacity of weather conditions included in the weather pattern, an altitude of weather conditions included in the weather pattern, a current location of the weather pattern and/or included weather conditions, a distance between various weather conditions included in the weather pattern (e.g., a distance between two clouds in the weather pattern), a rate of movement of the weather pattern and/or included weather conditions, a direction of movement of the weather pattern and/or included weather conditions, a projected trajectory of the weather pattern and/or included weather conditions, etc.

Following the determination of one or more characteristics associated with the identified weather pattern at block 310, operations may continue at block 315. At block 315, a potential impact of the identified weather pattern on the PV cells 105 may be determined or calculated. In determining the potential impact of the weather pattern on the PV cells 105, the potential impacts of the weather conditions included in the weather pattern may be determined. The potential impact of the weather pattern may include an estimated loss in the power output of the PV cells 105 that will occur as a result of weather conditions included in the weather pattern reaching and/or passing over or across the PV cells 105. The potential impact may also include estimated breaks in the weather pattern (e.g., breaks between clouds) in which the power output of the PV cells 105 may be increased. The potential impact may be determined for all of the PV cells 105 or for certain portions, arrays, or cells of the PV cells 105. Additionally, as desired in various embodiments of the invention, the determined potential impact may take into account an estimated or actual time at which weather conditions reach the PV cells 105, a number of the PV cells 105 that will be or that will potentially be affected, a sequence in which various PV cells 105 will be affected, etc. As an alternative to calculating an estimated loss in the power output of the PV cells 105, certain embodiments of the invention may assume a certain loss in power due to an indentified weather condition. For example, it may be assumed that a weather condition may lead to a complete loss in power output of the PV cells 105. Accordingly, the determined potential impact to the PV cells 105 may include an assumption of a certain loss in power output.

According to an aspect of the invention, the historical behavior of the output of the PV cells 105 may be utilized in the determination of the potential impact of a weather pattern or a weather condition. For example, historical data associated with the ramping up and/or ramping down of inverters 110 that are utilized to interface the PV cells 105 to a power grid 115 may be stored. Once a subsequent weather pattern is identified, at least a portion of the stored historical data may be accessed and factored into a determination of the potential impact of the weather pattern. For example, the impact of earlier weather conditions may be analyzed in order to estimate the impact of future weather conditions. As another example, estimated ramping fluctuations for the inverters 115 may be determined for a weather pattern. For example, if a sequence of cloud/no cloud/cloud is identified in a weather pattern, an estimated ramping sequence of ramp down, ramp up, ramp down may be determined. Historical data associated with prior ramping conditions due to previous weather conditions may be accessed and utilized to determine an estimated ramping sequence for an identified weather pattern. Additionally, as discussed in greater detail below with reference to block 320, the accessed historical data may be factored into adjusting an output of the PV cells 105 that is supplied to the power grid 115 in order to maintain stability in the power grid 115.

In addition to or as an alternative to determining a potential impact of the weather condition on the power output of the PV cells 105, a potential impact of the weather condition on a power grid, such as power grid 115 shown in FIG. 1, may be determined. For example, a potential impact of the weather condition on the stability of the power grid 115 may be determined.

Once the potential impact of the weather pattern on the PV cells 105 and/or the power grid 115 has been determined at block 315, operations may continue at block 320. At block 320, an output of the PV cells 105 that is supplied to the power grid 115 may be adjusted based at least in part on the determined potential impact. In this regard, the impact of the weather pattern on the power grid 115 may be reduced and the stability of the power grid 115 may be maintained. In order to control the output of the PV cells 105 this is supplied to the power grid 115, the output of one or more inverters, such as inverters 110, that interface the PV cells 105 to the power grid 115 may be adjusted. For example, the output of the inverters 110 may be ramped down or reduced in order to reduce the effects of the weather pattern on the power grid 115 as a weather condition, such as a cloud, passes over the PV cells 105. In this regard, spikes within the power grid 115 due to sharp reductions in power output of the PV cells 105 may be avoided. Additionally, the ramp down rate of the power output that is supplied to the power grid 115 may be controlled. In this regard, the power output may be ramped down in accordance with regulatory requirements, such as utility regulations. As another example, the output of the inventers 110 may be ramped up or increased in situations in which weather conditions, such as clouds, are not affecting the PV cells 105.

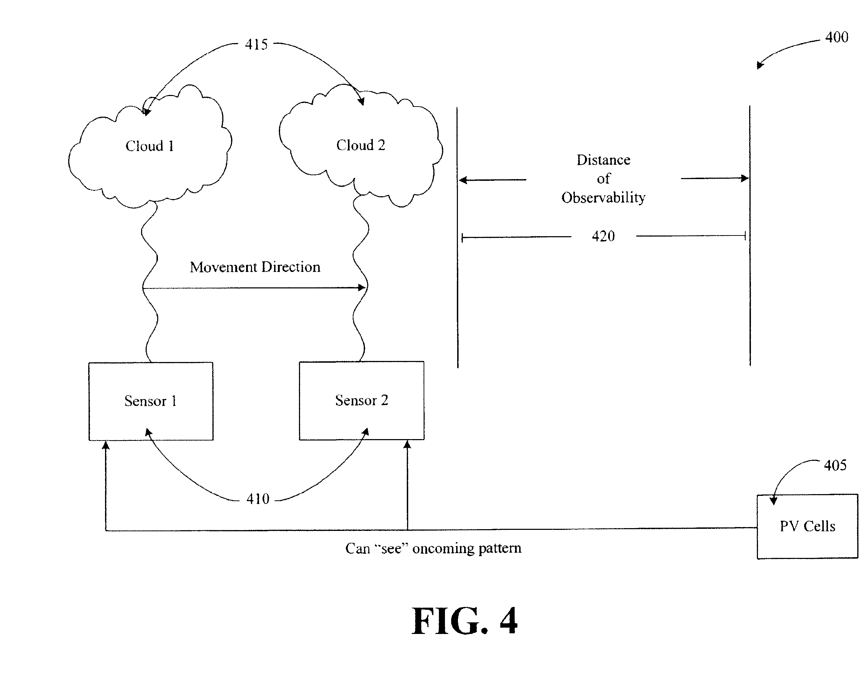

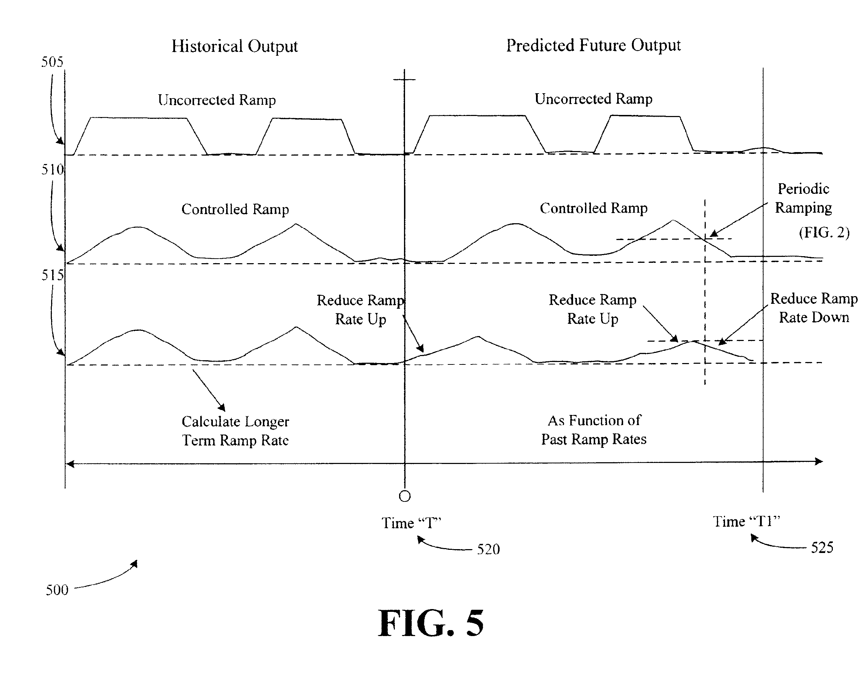

According to an aspect of the invention, historical data may be utilized in the adjustment of the output of the PV cells 105 that is supplied to the power grid 115. In this regard, situations in which relatively rapid ramping up and ramping down occurs may be reduced, leading to greater stability within the power grid 115. For example, if historical data indicates that the supplied output has been ramped up and/or ramped down within a predetermined historical period of time, such as within the last 5 minutes, 10 minutes, 30 minutes, etc., then the adjustment of the output based upon the current weather pattern may be determined in a manner that will reduce, average, and/or smooth out overall ramping in order to provide greater stability to the power grid 115. In this regard, both short term and relatively longer term ramping limitations may be satisfied. In the event that a plurality of weather conditions lead to a plurality of respective ramping conditions, the ramp up and ramp down rates may be adjusted to approach one or more average ramp rates, thereby leading to greater stability in the power grid 115. One example of averaging or smoothing ramp rates based on historical data is discussed in greater detail below with reference to FIGS. 4 and 5.

The method 300 may end following block 320.

The operations described in the method 300 of FIG. 3 do not necessarily have to be performed in the order set forth in FIG. 3, but instead may be performed in any suitable order. Additionally, in certain embodiments of the invention, more or less than all of the elements or operations set forth in FIG. 3 may be performed. For example, power may be supplied to the power grid 115 from one or more supplemental power sources as desired in a similar manner as that described in block 225 of FIG. 2. Further, the method 300 of FIG. 3 may be utilized in conjunction with any suitable renewable power source as desired in various embodiments of the invention.

FIG. 4 is a graphical representation of one example 400 of the potential effects of a pattern of weather conditions on the output of a renewable power source, according to an illustrative embodiment of the invention. With reference to FIG. 4, one or more suitable sensing devices, such as sensors 410, may be operable to identify detect a weather pattern 415 or series of weather conditions as the weather conditions approach one or more PV cells 405. In certain embodiments, the sensors 410, which may include any suitable sensing devices as discussed above with reference to FIG. 1, may identify the weather pattern 415 prior to the weather pattern 415 reaching the PV cells 405. For example, the weather pattern 415 may be identified at a distance of observability 420 from the PV cells 405. The distance of observability 420 may be any suitable distance that allows appropriate adjustment of the output of the PV cells 405 that is supplied to a power grid, such as power grid 115, in order to maintain stability within the power grid 115. For example, the distance of observability 420 may be one-half of a mile, one mile, two miles, etc.

The weather pattern 415 may include a plurality of weather conditions, such as a plurality of clouds. As shown in FIG. 4, there may be spacings or gaps between two weather conditions or clouds included in the weather pattern 415. These spacings or gaps may lead to situations in which the power output that is supplied to the power grid 115 is ramped up and ramped down in a repeated manner. Relatively rapid ramping up and ramping down may lead to instability in the power grid 115. For example, it may be difficult to provide power to the power grid 115 from one or more supplemental power sources (e.g., gas turbines, steam turbines, etc.) to account for the fluctuations in the power output of the PV cells 405. According to an aspect of the invention, the ramping or ramp rates of the PV cell output that is supplied to the power grid 115 may be controlled in order to maintain greater stability within the power grid 115. In certain embodiments of the invention, the controlling of the ramp rates may be based at least in part on historical data associated with prior weather conditions and/or weather patterns that have affected the PV cells 405, for example, clouds that have affected the PV cells 405 within a predetermined period of time, such as within the last 5 minutes, 10 minutes, 15 minutes, 30 minutes, etc.

FIG. 5 is a graphical representation of example outputs of a renewable power source based upon varying ramping conditions, according to an illustrative embodiment of the invention. The example outputs illustrated in FIG. 5 may be example outputs of the PV cells 405 illustrated in FIG. 4 based upon the weather pattern 415 identified in FIG. 4. Additionally, the benefits of taking historical data into account are illustrated in FIG. 5.

With reference to FIG. 5, output of the PV cells 405 is illustrated for three situations. The first situation 505 is a situation in which no controlled ramping of the PV cells 405 is conducted. The second situation 510 is a situation in which the output of the PV cells 405 is adjusted for individual weather conditions in order to maintain greater stability within a power grid, such as power grid 115. The third situation 515 is a situation in which historical ramping data is taken into consideration and utilized to average or smooth the ramping rates in order to lead to greater stability within the power grid 115 than that achieved in the second situation 510. For each of the three situations 505, 510, 515, both historical ramping that occurs before the current time "T" 520 and predicted future ramping between the current time and a future point in time "T1" 525 are illustrated.

With respect to the first situation 505, no corrected ramping is conducted for the output of the PV cells 405. In other words, the losses in output that is provided to the power grid 115 are directly attributable to the weather conditions included in the weather pattern 415 affecting the PV cells 405. For example, as clouds pass over the PV cells 405, the power output of the PV cells 405 is decreased, and the power output is increased when no clouds are passing over the PV cells 405. The first situation 505 may lead to relatively rapid fluctuations in the output that is supplied to the power grid 115 and/or to one or more spikes in the power grid 115 due to the magnitude of the power output changes, thereby resulting in instability within the power grid 115.

The second situation 510 involves the controlled ramping of the output of the PV cells 405 that is supplied to the power grid 115. For example, the ramp down and ramp up rates may be controlled based on the identification of weather conditions, such as clouds, prior to the weather conditions reaching the PV cells 405. In this regard, rapid changes in the output of the PV cells 405 that is supplied to the power grid 115 may be reduced. The controlled ramping in the second situation 510 may be similar to that achieved by the method 200 described above with reference to FIG. 2. However, the second situation 510 may not take historical data and/or historical ramping into account. In the event that relatively rapid ramping has occurred in the past, unstable conditions may occur in the power grid 115 even if the ramp rates are controlled due to relatively rapid ramp up and ramp down conditions. For example, a short term maximum ramp rate may be different than a relatively long term maximum ramp rate. Accordingly, controlling the ramp rates to account for a single weather condition may have a relatively limited effect on power grid stability. However, controlling the ramp rates in a similar manner for a plurality of weather conditions may lead to long term ramp rates that exceed long term maximum ramp rates, thereby leading to instability within the power grid 115.

The third situation 515 involves the controlled ramping of the output of the PV cells 405 that is supplied to the power grid 115 and takes historical ramping behavior and/or PV cell output into account. Once the weather pattern 415 is identified, the potential impact of the weather pattern 415 may be determined. The historical ramping behavior (e.g., the ramping that occurs prior to time "T" 520) may then be taken into account when adjusting the ramp rates to account for the identified weather pattern 415. For example, if the output has been ramped up and/or ramped down within a predetermined historical period of time, such as within the last 5 minutes, 10 minutes, 15 minutes, or 30 minutes, the ramping rates for the identified weather pattern 415 may be reduced or lessened. In certain embodiments, the ramping rates for the identified weather pattern 415 may be determined as a function of past or historical ramp rates. For example, the ramping rates may be reduced based upon a number of historical ramping conditions. As shown in FIG. 5, both the ramp up rates and the ramp down rates may be reduced. In this regard, greater stability may be maintained in the power grid 115. Additionally, supplemental power sources may be effectively controlled to compensate for lost power of the PV cells 405 due to the weather pattern 415. As desired, the ramping rates may be smoothed out over time to approach an average power that is supplied to the power grid 115. Additionally, the ramping rates may be adjusted to remain within a predetermined or desired change in power from the average power.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer readable program code or program instructions embodied therein, said computer readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the preferred mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for interfacing a renewable power source to a power grid, the method comprising:
   identifying at least one weather condition operable to affect power output of the renewable power source;
   determining a potential impact of the at least one weather condition on the renewable power source;
   accessing historical data associated with the impact of at least one prior weather condition on the renewable power source; and
   adjusting, based at least in part on the determined potential impact and the historical data, an output of the renewable power source that is supplied to the power grid.
2. The method of Clause 1, wherein identifying at least one weather condition comprises identifying at least one weather condition utilizing at least one radar, at least one satellite, at least one sensor, or at least one irradiance sensor.
3. The method of any preceding Clause, further comprising:
   determining one or more characteristics associated with the identified at least one weather condition,
   wherein determining a potential impact of the at least one weather condition comprises determining a potential impact based at least in part on the one or more determined characteristics.
4. The method of any preceding Clause, wherein the one or more characteristics comprise at least one of an irradiance of light that is transmitted through the at least one weather condition, an opacity of the at least one weather condition, a location of the at least one weather condition, a rate of movement of the at least one weather condition, or a direction of movement of the at least one weather condition.
5. The method of any preceding Clause, wherein:
   the renewable power source comprises at least one photovoltaic cell, and
      adjusting an output of the renewable power source comprises reducing an amount of power that is supplied to the power grid by the at least one photovoltaic cell via at least one inverter.
6. The method of any preceding Clause, wherein:
   the renewable power source comprises at least one photovoltaic cell,
   the at least one weather condition comprises a plurality of weather conditions, and
   adjusting an output of the renewable power source comprises ramping up and ramping down an amount of power that is supplied to the power grid by the at least one photovoltaic cell via at least one inverter to account for the plurality of weather conditions.
7. The method of any preceding Clause, wherein ramping up and ramping down an amount of power that is supplied to the power grid comprises ramping up and ramping down an amount of power based at least in part on a historical output of the at least one photovoltaic cell.
8. The method of any preceding Clause, wherein accessing historical data comprises accessing historical data for a predetermined period of time.
9. The method of any preceding Clause, further comprising:
   providing power to the power grid from one or more supplemental power sources.
10. A system for interfacing a renewable power source to a power grid, the system comprising:
   a renewable power source;
   at least one sensing device operable to identify at least one weather condition operable to affect the power output of the renewable power source; and at least one controller operable to determine a potential impact of the at least one weather condition on the renewable power source, to access historical data associated with the impact of at least one prior weather condition on the renewable power source, and to adjust, based at least in part on the determined potential impact and the historical data, an output of the renewable power source that is supplied to the power grid.
11. The system of any preceding Clause, wherein the renewable power source comprises at least one photovoltaic cell.
12. The system of any preceding Clause, wherein the at least one sensing device comprises at least one radar, at least one satellite, at least one sensor, or at least one irradiance sensor.
13. The system of any preceding Clause, wherein the at least one controller is further operable to determine one or more characteristics associated with the identified at least one weather condition and to determine the potential impact of the at least one weather condition based at least in part on the one or more determined characteristics.
14. The system of any preceding Clause, wherein the one or more characteristics comprise at least one of an irradiance of light that is transmitted through the at least one weather condition, an opacity of the at least one weather condition, a location of the at least one weather condition, a rate of movement of the at least one weather condition, or a direction of movement of the at least one weather condition.
15. The system of any preceding Clause, wherein:
   the renewable power source comprises at least one photovoltaic cell, and
   the at least one controller is operable to adjust the output of the renewable power source by reducing an amount of power that is supplied to the power grid by the at least one photovoltaic cell via at least one inverter.
16. The system of any preceding Clause, wherein:
   the renewable power source comprises at least one photovoltaic cell,
   the at least one weather condition comprises a plurality of weather conditions, and
   the at least one controller is operable to adjust an output of the renewable power source that is supplied to the power grid by ramping up and ramping down an amount of power that is supplied to the power grid by the at least one photovoltaic cell via at least one inverter to account for the plurality of weather conditions.
17. The system of any preceding Clause, wherein the at least one controller is operable to ramp up and ramp down an amount of power that is supplied to the power grid based at least in part on a historical output of the at least one photovoltaic cell.
18. The system of any preceding Clause, wherein the accessed historical data comprises historical data for a predetermined period of time.
19. The system of any preceding Clause, further comprising:
   one or more supplemental power sources operable to provide power to the power grid.
20. A method for interfacing photovoltaic cells to a power grid, the method comprising:
   identifying a plurality of weather conditions operable to affect power output of a plurality of photovoltaic cells;
   determining a potential impact of the plurality of weather conditions on the plurality of photovoltaic cells;
   accessing historical data associated with adjusting the power output of the plurality of photovoltaic cells within a predetermined historical period of time; and
   adjusting, based at least in part on the determined potential impact and the accessed historical data, an output of the plurality of photovoltaic cells that is supplied to the power grid.

## Claims

1. A method (300) for interfacing a renewable power source (105) to a power grid (115), the method (200) comprising:
identifying (305) at least one weather condition operable to affect power output of the renewable power source (105);
determining (215) a potential impact of the at least one weather condition on the renewable power source (105);
accessing historical data (125) associated with the impact of at least one prior weather condition on the renewable power source (105); and
adjusting (320), based at least in part on the determined potential impact and the historical data (126), an output of the renewable power source (105) that is supplied to the power grid.

2. The method of Claim 1, wherein identifying (305) at least one weather condition comprises identifying at least one weather condition utilizing at least one radar, at least one satellite, at least one sensor, or at least one irradiance sensor.

3. The method of any preceding Claim, further comprising:
determining (310) one or more characteristics associated with the identified at least one weather condition,
wherein determining (315) a potential impact of the at least one weather condition comprises determining a potential impact based at least in part on the one or more determined characteristics.

4. The method of any preceding Claim, wherein the one or more characteristics comprise at least one of an irradiance of light that is transmitted through the at least one weather condition, an opacity of the at least one weather condition, a location of the at least one weather condition, a rate of movement of the at least one weather condition, or a direction of movement of the at least one weather condition.

5. The method of any preceding Claim, wherein:
the renewable power source comprises at least one photovoltaic cell (105), and
adjusting (320) an output of the renewable power source comprises reducing an amount of power that is supplied to the power grid (115) by the at least one photovoltaic cell (105) via at least one inverter (110).

6. The method of any preceding Claim, wherein:
the renewable power source (105) comprises at least one photovoltaic cell (105),
the at least one weather condition comprises a plurality of weather conditions, and
adjusting an output of the renewable power source comprises ramping up and ramping down an amount of power that is supplied to the power grid (115) by the at least one photovoltaic cell (105) via at least one inverter (110) to account for the plurality of weather conditions.

7. The method of any preceding Claim, wherein ramping up and ramping down an amount of power that is supplied to the power grid (115) comprises ramping up and ramping down an amount of power based at least in part on a historical output of the at least one photovoltaic cell (105).

8. The method of any preceding Claim, wherein accessing historical data (126) comprises accessing historical data for a predetermined period of time.

9. The method of any preceding Claim, further comprising:
providing power to the power grid (115) from one or more supplemental power sources.
